Europäisches Patentamt

European Patent Office

Office européen des brevets

(19)

(11) EP 1 283 613 A1

(12) EUROPEAN PATENT APPLICATION
published in accordance with Art. 158(3) EPC

(43) Date of publication:
12.02.2003 Bulletin 2003/07

(51) Int Cl.⁷: H04J 13/04

(21) Application number: 01930075.5

(86) International application number:
PCT/JP01/03950

(22) Date of filing: 11.05.2001

(87) International publication number:
WO 01/089126 (22.11.2001 Gazette 2001/47)

(84) Designated Contracting States:
AT BE CH CY DE DK ES FI FR GB GR IE IT LI LU
MC NL PT SE TR

(30) Priority: 19.05.2000 JP 2000148146

(71) Applicant: MITSUBISHI DENKI KABUSHIKI
KAISHA
Tokyo 100-8310 (JP)

(72) Inventors:
• KANEKO, Koji, c/o Mitsubishi Denki K.K.
Tokyo 100-8310 (JP)
• NAGATA, Yoshihiro, c/o Mitsubishi Denki K.K.
Tokyo 100-8310 (JP)

(74) Representative: Pfenning, Meinig & Partner GbR
Mozartstrasse 17
80336 München (DE)

(54) RECEIVER AND INVERSE-SPREADING CODE GENERATING METHOD

(57) A control section (3) outputs control information necessary for generating processing of despreading codes, address information necessary for reading-out processing of despreading codes, and timing information; a original code generating section (1) generates despreading codes, based on the control information; and a code accumulation section (2) stores the de spreading codes for each address corresponding to the delay time of the multi-paths. And, a code reading-out section (4) receives despreading codes, which have been read out based on the address information, corresponding to each path, and outputs the received despreading-codes based on the timing information; a demodulating section (5) separately demodulates received signals, using despreading codes corresponding to each path; and a symbol combining section (6) combines all the demodulated signals.

FIG.1

## Description

TECHNICAL FIELD

The present invention relates to a receiver using an SS (Spread Spectrum technology) method and a CDMA (Code Division Multiple Access) method as a communication method. This invention particularly relates to a receiver best for generating despreading-codes in the case of large delay time on paths, or in the case of delay time which is different between paths especially in the multi-path communication environment, and to a method of generating the despreading codes.

BACKGROUND ART

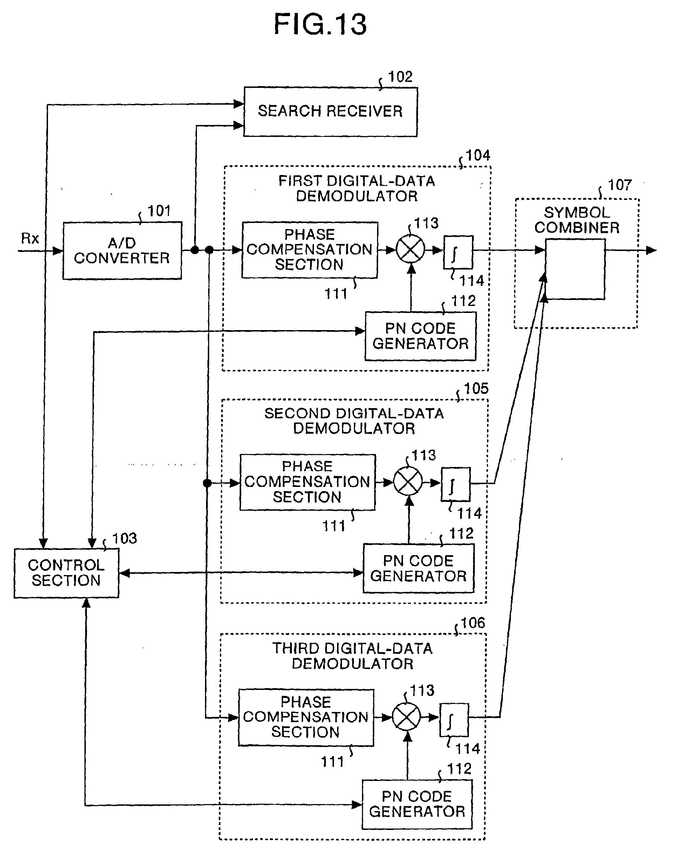

Hereinafter, a conventional receiver will be described. One of conventional receivers using an SS method and a CDMA method has been disclosed, for example, in "A RAKE Receiver Controlled by PN Code's Address", B-268, 1995 Society Conference of IEICE (the Institute of Electronics, Information, and Communication Engineers). Fig. 13 is a view showing a configuration of a receiver which uses the direct spread spectrum technology, and has been disclosed in the document.

In Fig. 13, 101 is an A/D converter; 102 is a search receiver; 103 is a control section; 104 is a first digital data demodulator; 105 is a second digital data demodulator; 106 is a third digital data demodulator; and 107 is a symbol combiner. Moreover, in all the digital data demodulators described above, 111 is a phase compensation section; 112 is a PN code generator; 113 is a multiplier; and 114 is an integrator.

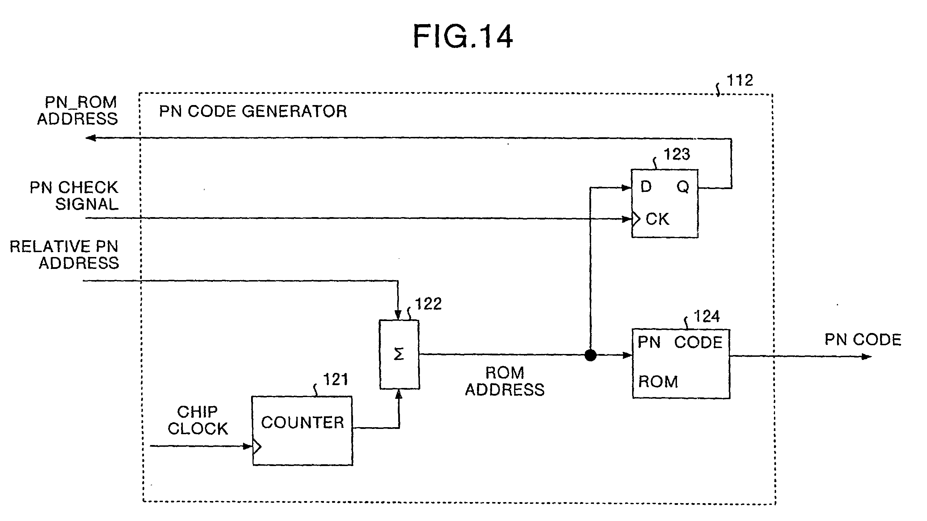

Furthermore, Fig. 14 is a view showing a configuration of the PN generator 112. In Fig. 14, 121 is a counter; 122 is a synthesizer; 123 is a latch section; and 124 is a PN code ROM.

Now, a method of generating despreading-codes in the conventional receiver will be briefly described. The above receiver generates PN codes (= M sequence codes) as despreading codes, for example, it is configured that the PN code generators 112 in each digital data demodulator function as circuits for reading out data (PN codes), and instructions of paths to be followed by each digital data demodulator are made in relative addresses of PN codes.

Specifically, in the first place, addresses are always generated simul taneously with a chip clock, and the addresses are added to the relative addresses supplied from the control section 103 to generate PN code addresses (ROM addresses) in the PN code generators 112. Then, the generated PN code addresses are held at rise timing of a PN check signal commonly supplied to each demodulator (that is, PN_ROM addresses are output) . At this time, the PN codes have been previously stored in the PN code ROM 124, and addresses are allotted for each modulator.

In the control section 103, relative PN addresses for forming reading-in time diversity are calculated, based on the PN code addresses which have been held above, and the calculation results are supplied to each demodulator for instruction to read out the PN codes. For example, when a digital data demodulator 1 follows the preceding wave (path (1)) as a result of signal retrieval with the search receiver 102, relative PN addresses, which makes a second digital data demodulator 2 follow the subsequent path (path (2)), and makes a digital data demodulator 3 follow the further subsequent path (path (3)), respectively, may be expressed in the following equations:

$$rlv_2 = mcp_2 + lad_1 - lad_2$$

$$rlv_3 = mcp_3 + lad_1 - lad_3$$

However, the $rlv_n$ expresses a relative PN address which a demodulator outputs; the $lad_n$ is a PN code address which is latched by rise timing of a PN check signal; the $mcp_n$ is a delay quantity (chip space) from the path (1); and n is a number of a path (demodulator) . In addition, addition and subtraction in the above-mentioned equations are performed in mod (code length).

Thus, the conventional receiver has a configuration comprising a required number of demodulators in order to follow the preceding wave and a plurality of delay waves, and further having a PN code generator for each demodulator. By the configuration, multi-paths are independently demodulated, and, thereby, the receiver deals with a case where there is large delay time on paths, or where the delay time is different between paths, in the multi-path communication environment.

However, as the corresponding number of the PN code generators to that of paths to be received are required in the conventional receiver, that is, as one piece of the generator is required for each demodulator, a plurality of the same kind of circuits have been installed. Thereby, there have been problems that the circuit size and the electric power consumption are increased.

In addition, there have been another problems in the conventional receiver that changes in codes may not be easily dealt with, as the PN codes are required to be stored in the PN code ROM beforehand.

It is an object of the present invention to provide a receiver which may easily deal with generation processing of despreading codes in the case of large delay time on paths, or in the case of different delay times between each path under the multi-path communication environment; which may realize reduction in the circuit size and the electric power consumption; and which may easily deal with changes in PN codes occurred in the course of the processing; and, a method best for generating despreading-codes in the receiver.

DISCLOSURE OF THE INVENTION

The receiver according to the present invention comprises: a control unit (corresponding to the control section 3 in the embodiments which will be described later) which outputs control information necessary for generating processing of despreading codes, and address information and timing information necessary for reading-out processing of despreading codes; a despreading-code generating unit (corresponding to the original code generating section 1) which continuously generates despreading-codes, based on the control information; a code storage unit (corresponding to the code accumulation section 2) which stores the despreading codes for each address corresponding to delay time of multi-paths; a plurality of code reading-out units (corresponding to the code reading-out section 4) each of which receives the despreading codes, which have been read out based on the address information, corresponding to each path, and outputs the received despreading-codes based on the timing information; a plurality of demodulating units (corresponding to the demodulating section 5) each of which separately demodulates received signals, using the despreading codes corresponding to each path; and a combining unit (corresponding to the symbol combining section 6) which combines all of the demodulated signals.

In the receiver according to another invention, the code storage unit performs, according to a time sharing base, writing-in processing of despreading codes for the like chip interval, and reading-out processing of codes accumulated for the like chip interval.

In the receiver according to still another invention, the despreading-code generating unit outputs despreading codes for one period based on the control signal, and, thereafter, stops the operation.

In the receiver according to still another invention, the despreading-code generating unit further outputs new despreading codes for one period based on the control signal in the case of changes in the despreading codes, and, thereafter, stops the operation.

In the receiver according to still another invention, the code storage unit further has a configuration where conversion from serial data of one bit to parallel data of plural bits is performed at writing-in operation of the despreading codes (corresponding to the first bit-width conversion section 21); the converted parallel data are simultaneously written in; conversion from parallel data of plural bits, which have been simultaneously read out, to serial data of one bit is performed at subsequent reading-out operation (corresponding to the second bit-width conversion section 22); and the converted serial data are output to the code reading-out section one by one.

In the receiver according to still another invention, a plurality of combinations of the code storage unit, the code reading-out unit, and the demodulating unit (corresponding to a combination of the first code accumulation section 32, the first code reading-out section 34, and the first demodulating section 36, and a combination of the second code accumulation section 33, the second code reading-out section 35, and the second demodulating section 37) are provided; a selection unit (corresponding to the distribution section 31) which selects any one of plurality of code storage units is further provided; and despreading codes are stored in the selected code storage unit.

In the receiver according to still another invention, a plurality of the despreading-code generating units are further provided (correspond to the first original code generating section 51a and the second original code generating section 51b); and despreading codes generated in each despreading generating unit are stored in the selected code storage unit.

In the receiver according to still another invention, the despreading-code generating unit generates M sequence codes by calculating an exclusive-OR of arbitrary bit outputs in a shift register (corresponding to the arbitrary PN code generating section 61).

In the receiver according to still another invention, the despreading codes are generated by provision of a plurality of the despreading-code generating units (corresponding to the first arbitrary PN generating section 61a, the second arbitrary PN generating section 61b, and the Nth arbitrary PN generating section 61c), and by calculating an exclusive-OR of the outputs of each despreading-code generating unit.

The method of generating despreading-codes according to still another invention comprises: a despreading-code generating step of continuously generating despreading-codes, based on control information necessary for generating processing of despreading codes; a code storage step of storing the despreading codes for each address corresponding to the delay time of the multi-paths; and a plurality of code reading-out steps for receiving the despreading codes, which have been read out based on the address information, corresponding to each path, and for outputting the received despreading codes based on predetermined timing information.

In the method of generating despreading-codes according to still another invention, the code storage step has a configuration where writing-in processing of de spreading codes for the like chip interval, and reading-out processing of codes accumulated for the like chip interval are performed according to the time sharing base.

In the method of generating de spreading-codes according to still another invention, the despreading code generating step has a configuration where, after despreading codes for one period are output based on the control signals, the operation is stopped.

In the method of generating despreading-codes according to still another invention, the despreading code generating step has a configuration where, after new despreading codes for one period are output based on the control signals, the operation is stopped.

In the method of generating despreading-codes according to still another invention, the code storage step has a configuration where conversion from serial data of one bit to parallel data of plural bits is performed at writing-in operation of the despreading codes; the converted parallel data are simultaneously written in; conversion from parallel data of plural bits, which have been simultaneously read out, to serial data of one bit is performed at subsequent reading-out operation; and the converted serial data are sequentially output.

In the method of generating despreading-codes according to still another invention, the despreading codes are generated for each process by provision of a plurality sets comprising a series of the code storage step and the code reading-out step, and by further inclusion of a selection step of selecting any one of the plural sets of processes.

BRIEF DESCRIPTION OF THE DRAWINGS

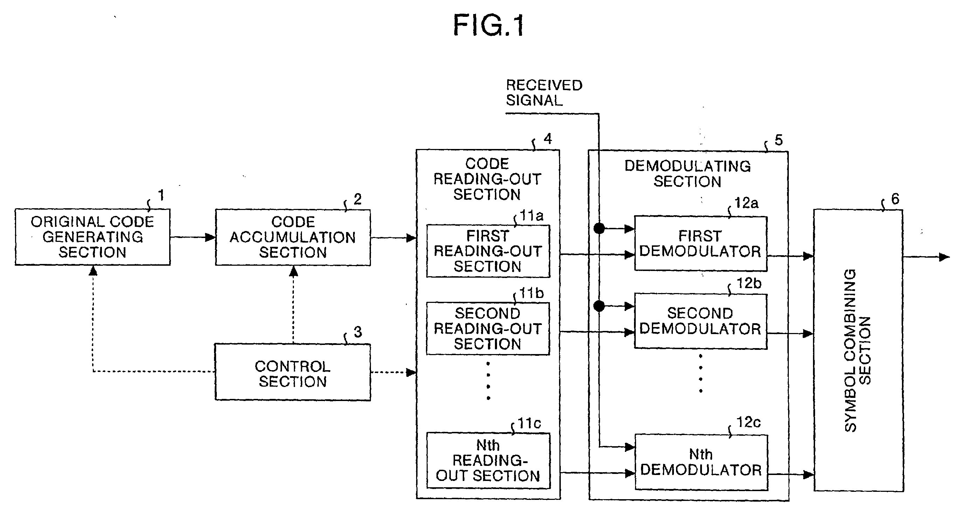

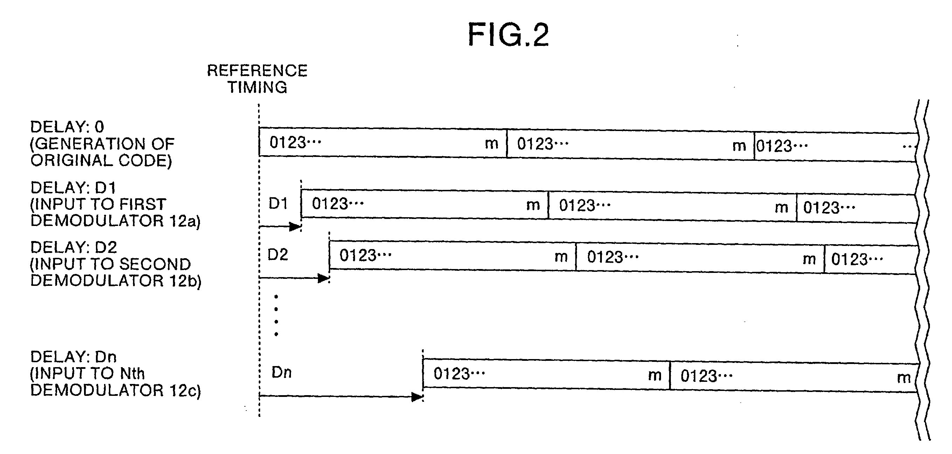

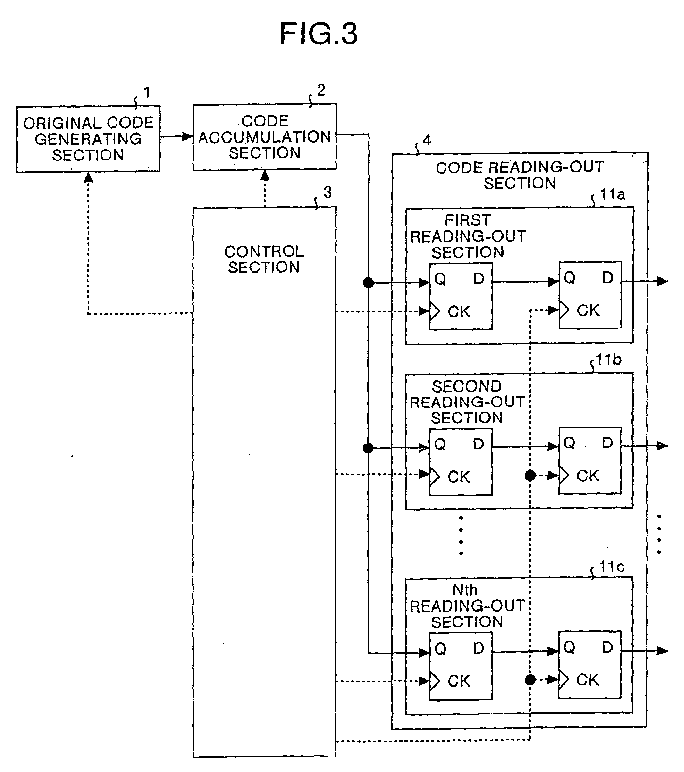

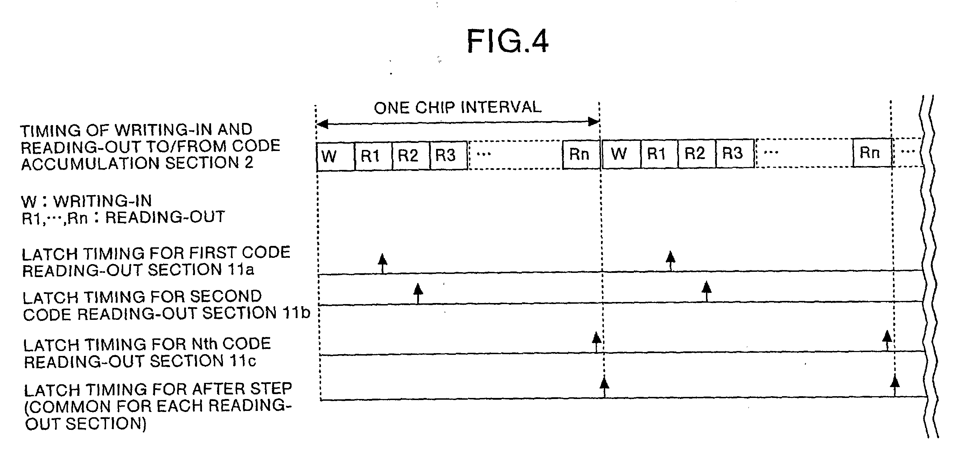

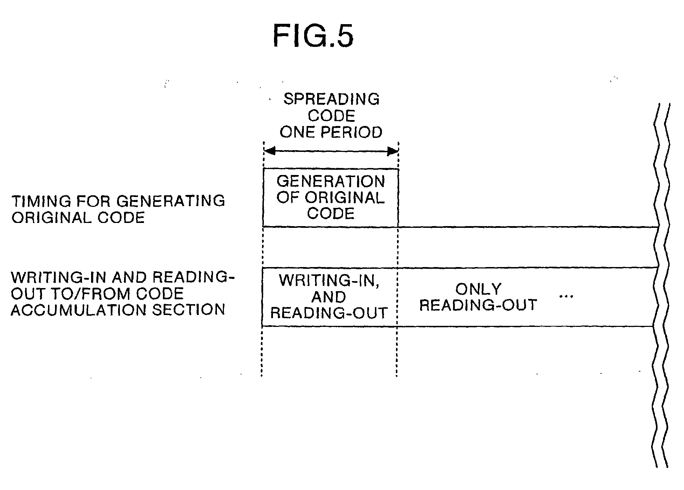

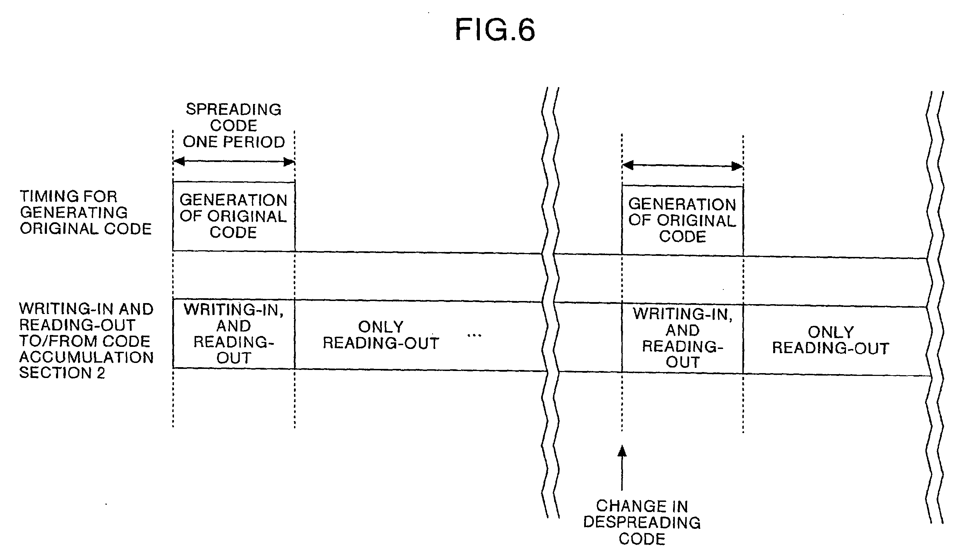

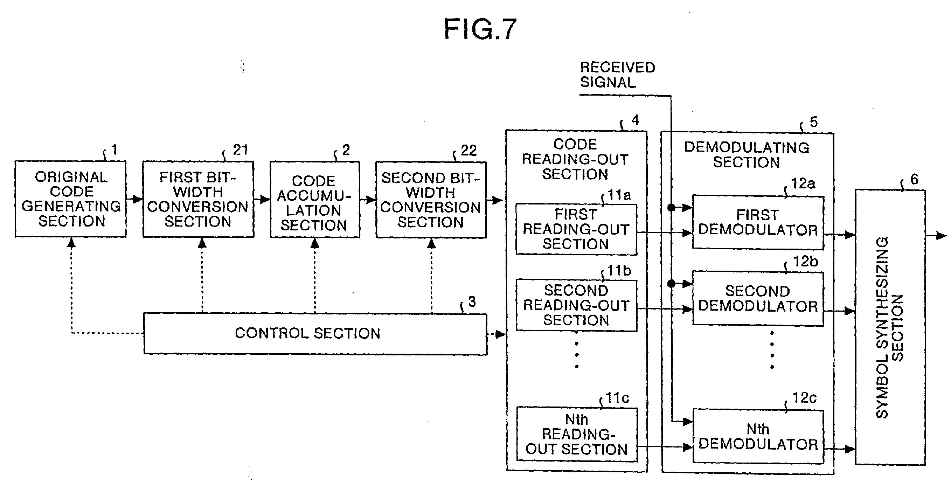

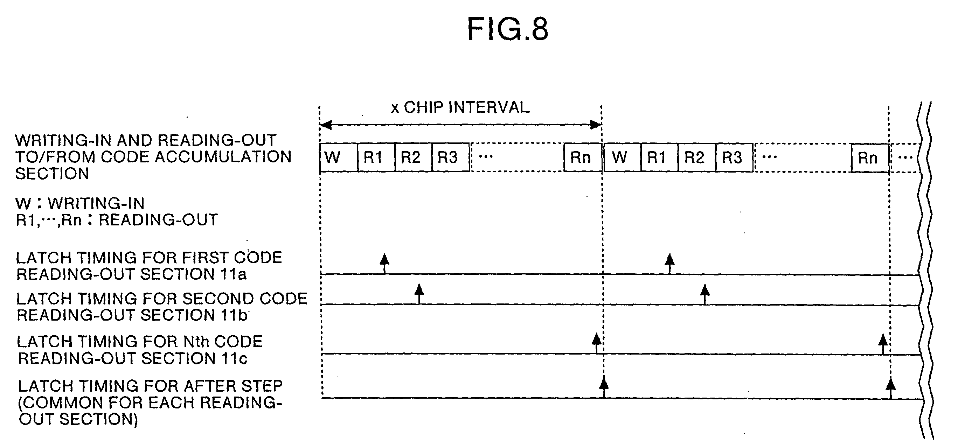

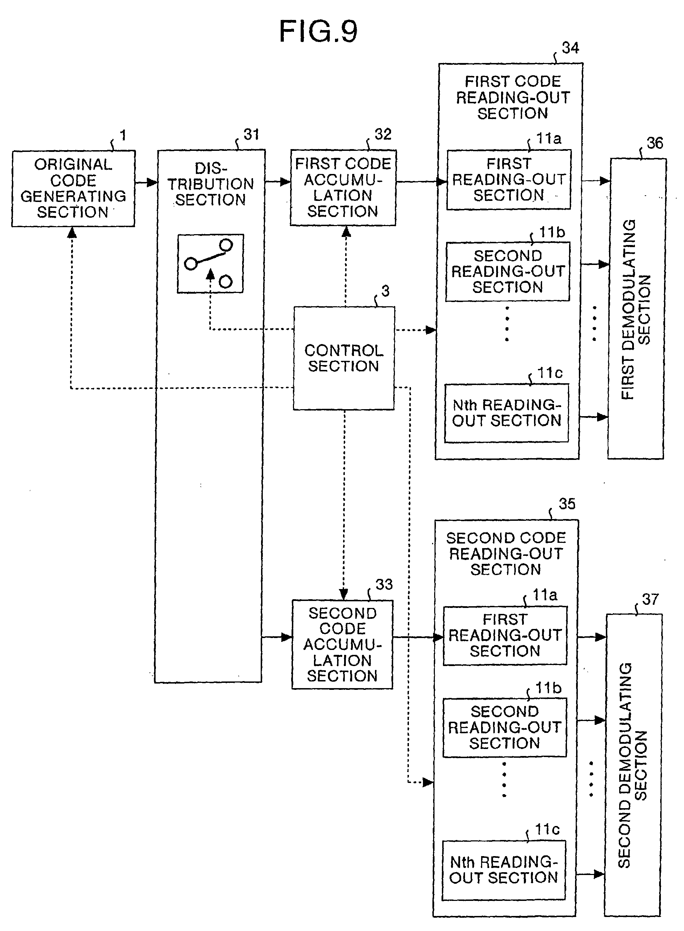

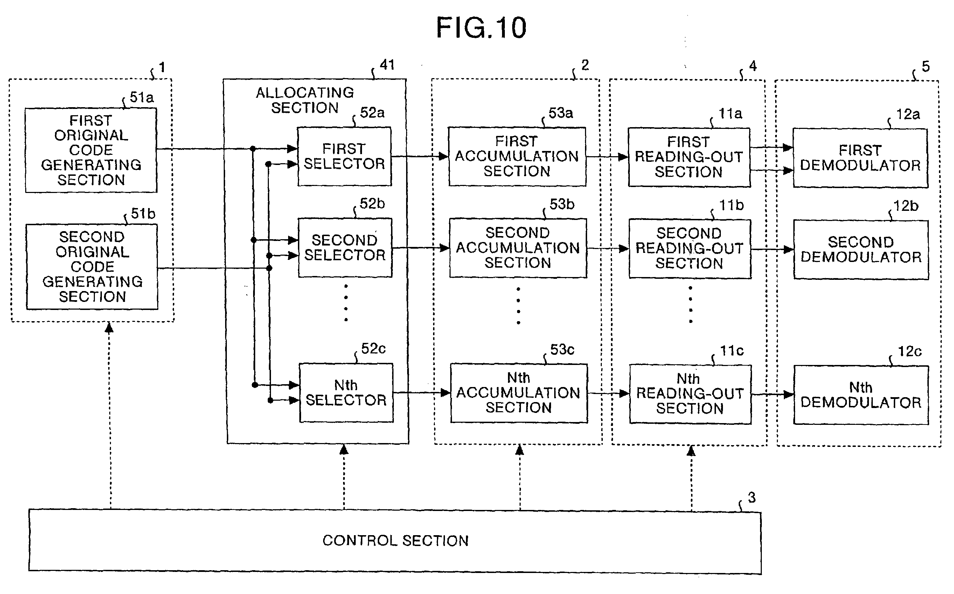

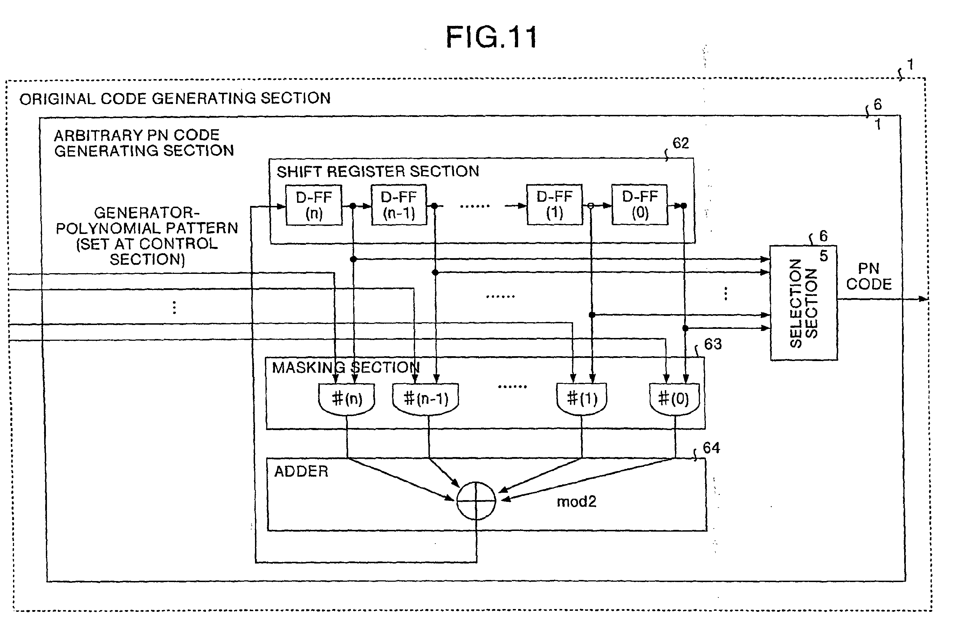

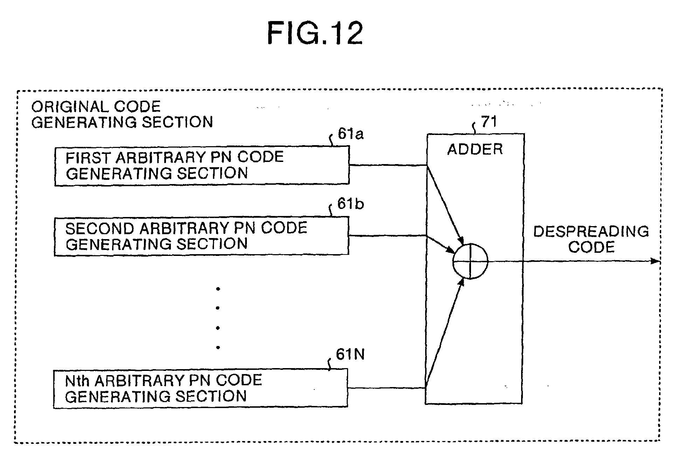

Fig. 1 is a view showing a configuration of a receiver according to a first embodiment of the present invention; Fig. 2 is a view showing timing of despreading codes to be supplied to each demodulator; Fig. 3 is a view showing a configuration of a code reading-out section, and a control signal transmitted from a control section to the code reading-out section; Fig. 4 is a view showing writing-in/reading-out timing of a code accumulation section, and latch timing of the code reading-out section; Fig. 5 is a view showing operation timing of an original code generating section, and a writing-in/reading-out state of the code accumulation section; Fig. 6 is a view showing operation timing of an original code generating section , and a writing-in/reading-out state of the code accumulation section, in the case of changes in despreading codes which are occurred in the course of the processing; Fig. 7 is a view showing a configuration of a receiver according to a third embodiment of the present invention; Fig. 8 is a view showing writing-in/reading-out timing of a code accumulation section, and latch timing of the code reading-out section; Fig. 9 is a view showing a configuration of a receiver according to a fourth embodiment of the present invention; Fig. 10 is a view showing a configuration of a receiver according to a fifth embodiment of the present invention; Fig. 11 is a view showing a configuration of an original code generating section; Fig. 12 is a view showing another configuration of the original code generating section; Fig. 13 is a view showing a configuration of a conventional receiver; and Fig. 14 is a view showing a configuration of a conventional PN code generator.

BEST MODE FOR CARRYING OUT THE INVENTION

Embodiments of receivers and methods for generating despreading-codes according to the present invention will be described in detail, based on the accompanying drawings. However, the present invention is not limited to the following embodiments.

Embodiment 1:

Fig. 1 is a view showing a configuration of a receiver according to a first embodiment of the present invention. In Fig. 1, 1 is an original code generating section; 2 is a code accumulation section; 3 is a control section; 4 is a code reading-out section; 5 is a demodulating section; and 6 is a symbol combining section. Moreover, in the code reading-out section 4, 11a is a first reading-out section; 11b is a second reading-out section; and 11c is an Nth (an integer indicating a predetermined number of paths), and in the demodulating section 5, 12a is a first demodulator; 12b is a second demodulator; and 12c is an Nth demodulator. Here, dashed lines in Fig. 1 indicate signals for control.

Then, schematic operations of the receiver will be described. In the receiver shown in Fig. 1, in the first place, the original code generating section 1 continuously generates despreading codes, such as PN codes, necessary for receiving processing, based on control signals from the control section 3 (refer to Fig. 2). Then, the generated despreading codes are accumulated for a while in the code accumulation section 2.

Addresses corresponding to the delay time of each path are supplied to the code accumulation section 2 in the control section 3. At this time, despreading codes corresponding to the addresses are read out from the code accumulation section 2, and the despreading codes are supplied to each demodulator in the demodulating section 5 at predetermined timing in the code reading-out section 4 which have received the despreading codes. Fig. 2 is a view showing timing of despreading codes to be supplied to each demodulator. The despreading codes are input to each demodulator in a state where the generation timing is assumed to be reference timing, and a delay quantity $D1, D2, ...,$ or $Dn$ (n represents a total number of the demodulators) corresponding to each path is added to the reference timing as shown in the drawing.

Thereafter, each demodulator which has received the despreading codes demodulates received signals with the despreading codes. Finally, demodulated signals output from each demodulator are combined in the symbol combining section 6 to make desired demodulated data.

Fig. 3 is a view showing a configuration of a code reading-out section 4, and a control signal transmitted from the control section 3 to the code reading-out section 4. And, Fig. 4 is a view showing writing-in/reading-out timing of the code accumulation section 2, and latch timing of the code reading-out section 4.

For example, writing-in processing to the code accumulation section 2, and the reading-out processing from the code accumulation section 2 are performed according to the time sharing shown in Fig. 4. Specifically, in the first place, one chip interval of each despreading code is delimited into intervals the number of which is corresponding to the number of writing-in processing and all pieces of reading-out processing, that is, to a number obtained by addition of 1 to the number of the code reading-out section corresponding to that of the multi-paths. Then, the code reading-out section 4 sequentially latches the despreading codes corresponding to each path at the rise timing of the control signals for reading-out, which are transmitted from the control section 3, using a latch section at a previous step before processing in the first reading-out section 11a, a latch section at a previous step before processing in the second reading-out section 11b, and a latch section at a previous step before processing in the Nth reading-out section. Thereafter, retiming of all the despreading codes which have been latched by the latch section at the previous step is performed at a rise timing of a control signal common for all reading-out section which is transmitted from the control section 3, and the despreading codes are simultaneously output to each demodulator.

Thus, it becomes possible without using a plurality of PN code generators, though a plurality of PN code generators have been conventionally used, to supply desired despreading codes to a plurality of demodulators, even in the case of large delay time on paths, or in a case where a plurality of despreading codes with different delay times are generated, as it is configured in the first embodiment that despreading code strings generated with only one original code generating section 1 are written in the code accumulation section 2, and the despreading codes are properly read out, based on addresses corresponding to delay quantities instructed by the control section 3.

Reduction in the circuit size and the electric power consumption may be realized in the first embodiment, as it is configured that despreading code strings generated with only one original code generating section 1, different from a conventional configuration where a plurality of PN code generators are provided, are written in to the code accumulation section 2, and the despreading codes are properly read out, based on addresses corresponding to delay quantities instructed by the control section 3.

Moreover, remarkable reduction in delay time from generation of the despreading codes to their feeding to each demodulator may be realized in the first embodiment, comparing with that of a conventional technology where all codes are written in for a while and, then, sequentially read out, as writing-in processing of despreading codes for the like chip interval, and reading-out processing of codes accumulated for the like chip interval are performed according to the time sharing base under generating the despreading codes.

Embodiment 2:

Fig. 5 is a view showing operation timing of an original code generating section 1, and a writing-in/reading-out state of a code accumulation section 2, as a second embodiment of the present invention. As a receiver according to the second embodiment has the same configuration as that of the first embodiment, parts similar to those of the first embodiment are denoted by the same reference numerals as those in the first embodiment, and detailed description will be eliminated.

In the second embodiment, the original code generating section 1 outputs despreading codes for one period according to control signals transmitted from a control section 3, and, thereafter, stops the operation. The writing-in processing to the code accumulation section 2 is performed for the one-period despreading codes under outputting.

Fig. 6 is a view showing operation timing of the original code generating section 1, and a writing-in/reading-out state of the code accumulation section 2, in the case of changes in despreading codes which are occurred in the course of the processing. Even in the case of changes in despreading codes which are occurred in the course of the processing, the original code generating section 1 are operated in a similar manner to that of the case for one period from a timing to be changed, and writing-in processing to the code accumulation section 2 is performed during the above-mentioned operation.

Thus, remarkable reduction in electric power consumption may be realized in the second embodiment by control so that the original code generating section 1 is operated for time duration corresponding to one period of the despreading codes, and writing-in processing to the code accumulation section 2 is performed during this period. Moreover, it is possible by the same control as that of the case easily to deal with a case where changes in the despreading codes are occurred in the course of the processing.

Embodiment 3:

Fig. 7 is a view showing a configuration of a receiver according to a third embodiment of the present invention. In Fig. 7, 21 is a first bit-width converting section for converting from serial data of one bit to parallel data of a plurality of bits; and 22 is a second bit-width converting section for converting from parallel data of a plurality of bits to serial data of one bit. Here, parts similar to those of the first embodiment are denoted by the same reference numerals as those in the first embodiment, and detailed description will be eliminated.

For example, in the third embodiment, conversion from serial data of one bit to parallel data of plural bits is performed at writing-in operation; the converted parallel data are simultaneously written in; bit-width conversion from parallel data of plural bits, which have been simultaneously read out, to serial data of one bit is performed at subsequent reading-out operation; and the converted serial data are output to a code reading-out section 4 one by one, though the first embodiment has a configuration where despreading codes are written bit by bit into a code accumulation section 2 according to a timesharing base, and, thereafter, the accumulated codes are read out bit by bit.

Fig. 8 is a view showing writing-in/reading-out timing of a code accumulation section 2, and latch timing of the code reading-out section. In the third embodiment, in the first place, an interval of x (an arbitrary integer) chips of each despreading code is delimited into intervals the number of which is corresponding to the number of the writing-in processing and all pieces of reading-out processing, that is, to a number obtained by addition of 1 to the number of the code reading-out section corresponding to that of multi-paths. Subsequently, the code reading-out section 4 sequentially latches the despreading codes corresponding to each path, using a latch section at a previous step before processing in the first reading-out section 11a, a latch section at a previous step before processing in the second reading-out section 11b, and a latch section at a previous step before processing in the Nth reading-out 11c. Thereafter, retiming of all the despreading codes which have been latched by the latch section at the previous step is performed at a rise timing of a control signal, which is transmitted from the control section 3, common for all pieces of reading-out section, and the despreading codes are simultaneously output to each demodulator.

Thus, as it is configured in the third embodiment that conversion from serial data of one bit to parallel data of plural bits is performed at writing-in operation; the converted parallel data are simultaneously written in; bit-width conversion fromparallel data of plural bits, which have been simultaneously read out, to serial data of one bit is performed at subsequent reading-out operation; and the converted serial data are output to a code reading-out section 4 one by one, the operation clock rate necessary for writing-in processing may be controlled. Moreover, the electric power consumption may be further reduced by controlling the operation clock rate.

Embodiment 4:

Fig. 9 is a view showing a configuration of a receiver according to a fourth embodiment of the present invention. In Fig. 9, 31 is a distribution section; 32 is a first code accumulation section; 33 is a second code accumulation section; 34 is a first code reading-out section; 35 is a second code reading-out section; 36 is a first demodulating section; and 37 is a second demodulating section. Here, parts similar to those of the first embodiment are denoted by the same reference numerals as those in the first embodiment, and detailed description will be eliminated. Moreover, the internal configuration of the first code reading-out section 34 and second code reading-out section 35 is similar to that of the internal configuration of the code reading-out section 4.

The distribution section 31 selects any one of the plurality of code accumulation sections, based on a control signal from the control section 3 in the fourth embodiment, and, thereafter, the despreading codes generated in the original code generating section 1 are written in, though one original code generating section 1 is provided with one code accumulation section 2, one code reading-out section 4, and one demodulating section 5 in the first embodiment.

Thus, as it is configured in the fourth embodiment that one original code generating section is provided with a plurality of code accumulation sections, and the despreading codes are stored in an arbitrary code accumulation section by instruction of the control section 3, one code generator may deal with plural kinds of despreading codes. Here, though the fourth embodiment has a configuration where one original code generating section is provided with two sets of a code accumulation section, a code reading-out section, and a demodulating section, the present invention is not limited to the configuration, and may have another configuration comprising, for example, three or more sets according to the kinds of the despreading codes.

Embodiment 5:

Fig. 10 is a view showing a configuration of a receiver according to a fifth embodiment of the present invention. In Fig. 10, 41 is an allocating section; 51ais a first original code generating section; 51b is a second original code generating section; 52a is a first selector; 52b is a second selector; 52c is an Nth selector; 53a is a first accumulation section; 53b is a second accumulation section; and 53c is an Nth accumulation section. Here, parts similar to those of the first embodiment are denoted by the same reference numerals as those in the first embodiment, and detailed description will be eliminated.

In the fifth embodiment, a plurality of code accumulating sections, code reading-out sections, and demodulating sections are provided for one original code generating section 1. However, in the fifth embodiment, a plurality of original code generating sections are provided; the allocating section 41 selects any one of a plurality of code accumulation sections, based on a control signal from a control section 3; and despreading codes generated in each original code generating section are output to the selected code accumulation section, though one original code generating section is provided with aplurality of code accumulation sections, code reading-out section, and demodulating section in the fifth embodiment.

Thus, as the fifth embodiment has a configuration where a plurality of original code generating sections and a plurality of code accumulation sections are provided, and 'code accumulation section to which the outputs of each original code generating section are connected may be selected, plural kinds of despreading codes may be easily dealt with, and, at the same time, remarkable reduction in required time for the following changes may be realized even in the case of changes in a plurality of despreading codes. Here, though two original code generating section are configured to be provided in the fifth embodiment, the present invention is not limited to the fifth embodiment, but may have a configuration comprising, for example, three or more original code generating section according to the kinds of the despreading codes and required time for changes in the codes.

Embodiment 6:

Fig. 11 is a view showing a configuration of the original code generating section in the first to fifth embodiments. In Fig. 11, 61 is an arbitrary PN code generating section; 62 is a shift register section; 63 is a masking section; and 64 is an addition section.

The arbitrary PN code generating section of the original code generating section 1 has a configuration where the addition section 64 calculates an exclusive OR of the outputs obtained from predetermined bit positions in the shift register section 62; the calculated result is input to the most significant bit of the shift register section 62; and the PN codes (M sequence codes) are sequentially obtained by repetition of the operations. Here, the bit positions are corresponding to generator polynomials of the PN codes.

Specifically, the masking section 63 performs masking, corresponding to the generator polynomials, of the outputs of each D-FF in the shift register section 62, using AND gates; thereafter, the addition section 64 calculates an exclusive-OR of each masking outputs; the calculation result is returned to. D-FF (n) of the shift register section 62 sequentially to generate arbitrary PN codes'. When the generator polynomial is, for example, X25 + X3 + 1, it is assumed that n is equal to 24, and that the pattern of the generator polynomial, which is supplied to the AND gates # (3), # (0) of the masking section 63, is "1". Accordingly, the addition section 64 calculates an exclusive-OR of the outputs of the D-FF (3), and the D-FF (0); the calculation result is repeatedly input to the D-FF (24); and then the shift register section 62 sequentially generates arbitrary PN codes. As it is configured in the sixth embodiment that the output of the arbitrary D-FF may be selected, using a selection section 65, for example, generator polynomials with a number of steps equal to or lower than the that of steps of the shift register are dealt with.

On the other hand, Fig. 12 is a view showing another configuration of the original code generating section. In Fig. 12, 61a is an first arbitrary PN code generation section; 61b is a second arbitrary PN code generation section; 61c is an Nth arbitrary PN code generation section; and 71 is an addition section. The original code generating section 1 shown in Fig. 12 has a configuration where the despreading codes are generated, as a plurality of arbitrary PN code generation sections are provided, and the calculation of the exclusive-OR of each output is performed.

Thus, as the original code generating section 1 has a configuration as shown above in Fig. 11 in the sixth embodiment, PN codes with arbitrary generator polynomials may be generated, and, furthermore, changes in the generator polynomials may be easily dealt with. Moreover, as the original code generating section 1 has a configuration as shown above in Fig. 12, various kinds of codes such as gold codes may be generated.

As described above, the present invention has advantages that it is possible to obtain a receiver by which it becomes possible without using a plurality of PN code generators, though the generators have been conventionally used, to supply desired despreading codes to plurality of demodulating units, even in the case of large delay time on paths, or in a case where a plurality of despreading codes with different delay times are generated, as it is configured that despreading code strings generated with only one piece of original code generating unit is written in the code storage unit, and the despreading codes are properly read out, based on addresses corresponding to delay quantities instructed by the control unit. And, there are also advantages that it is possible to obtain a receiver by which reduction in the circuit size and the electric power consumption may be realized, as it is configured that despreading code strings generated with only one piece of original code generating unit, different from a conventional configuration where a plurality of PN code generators are provided, are written in to the code storage unit, and the despreading codes are properly read out, based on addresses corresponding to delay quantities instructed by the control unit.

Moreover, it is possible to obtain a receiver by which remarkable reduction in delay time from generation of the despreading codes to their feeding to each demodulating unit may be realized, comparing with that of a conventional technology where all codes are written in for a while, and, then, are sequentially read out, as writing-in processing of despreading codes for the like chip interval, and reading-out processing of codes accumulated for the like chip interval are performed according to the time sharing base.

Furthermore, it is possible to obtain a receiver by which remarkable reduction in electric power consumption may be realized by operation so that the despreading-code generating unit is operated for time duration corresponding to one period of the despreading codes, and writing-in processing to the code storage unit is performed during the duration.

Moreover, it is possible to obtain a receiver by which it is possible easily to deal with even a case where changes in the despreading codes are occurred in the course of the processing.

Furthermore, it is possible to obtain a receiver by which the operation clock rate necessary for writing-in processing may be controlled by a configuration in which conversion from serial data of one bit to parallel data of plural bits is performed at writing-in operation; the converted parallel data are simultaneously written in; conversion from parallel data of plural bits, which have been simultaneously read out, to serial data of one bit is performed at subsequent reading-out operation; and the converted serial data are output to the code reading-out unit one by one. Moreover, there are advantages that it is possible to obtain a receiver by which the electric power consumption may be further reduced by controlling the operation clock rate.

Moreover, it is possible to obtain a receiver by which one piece of despreading-code generating unit may deal with plural kinds of despreading codes by provision of plurality of code storage unit which one piece of despreading-code generating unit, and by storing despreading codes in a piece of arbitrary code storage unit based on the instruction of the control unit.

Furthermore, it is possible to obtain a receiver by which plural kinds of despreading codes may be easily dealt with, and, at the same time, remarkable reduction in required time for changes in a plurality of despreading codes may be realized even in the case of the changes by a configuration where plurality of despreading-code generating unit and plurality of code storage unit are provided, and pieces of code storage unit to which the outputs of each original code generating unit are connected may be selected.

Moreover, it is possible to obtain a receiver by which PN codes with arbitrary generator polynomials may be generated, and, furthermore, changes in the generator polynomials may be easily dealt with.

Furthermore, it is possible to obtain a receiver by which various kinds of codes such as gold codes may be generated.

Moreover, it becomes possible without using a plurality of PN code generators, though the generators have been conventionally used, to generate desired despreading codes, even in the case of large delay time on paths, or in a case where a plurality of despreading codes with different delay times, as it is configured that despreading code strings generated at the despreading code generating step are stored, and the despreading codes are properly read out, based on addresses corresponding to delay quantities.

Another invention has advantages that remarkable reduction in delay time from generation of the despreading codes to their feeding may be realized, comparing with that of a conventional technology where all codes are written in for a while, and, then, sequentially read out, as writing-in processing of despreading codes for the like chip interval, and reading-out processing of codes accumulated for the like chip interval are performed according to the time sharing base.

Moreover, remarkable reduction in electric power consumption may be realized, comparing with that of the conventional technology, by operation so that the despreading code generating step is operated for time duration corresponding to one period of the despreading codes, and writing-in processing of the despreading codes is performed during the duration.

Furthermore, changing processing in despreading codes may be easily performed even in the case of the processing which is performed in the course of the processing.

Moreover, the operation clock rate necessary for writing-in processing may be controlled by a configuration in which conversion from serial data of one bit to parallel data of plural bits is performed at writing-in operation; the converted parallel data are simultaneously written in; conversion from parallel data of plural bits, which have been simultaneously read out, to serial data of one bit is performed at subsequent reading-out operation; and the converted serial data are output one by one.

Furthermore, many kinds of despreading codes may be easily generated, as the despreading codes may be stored in an arbitrary code storage section by provision of a plurality of sets comprising a series of the code storage step and the code reading-out step, and by further inclusion of a selection step of selecting any one of plural sets comprising the processes.

INDUSTRIAL APPLICABILITY

As described above, the receiver and the method of generating the despreading codes according to the present invention are useful for receivers using the SS (Spread Spectrum technology) method and the CDMA (Code Division Multiple Access) method as a communication method, and suitable for generating despreading codes in the case of large delay time on paths, or in the case of delay time which is different between paths especially in the multi-path communication environment.

**Claims**

**1.** A receiver comprises:

 a control unit which outputs control information necessary for generating processing of despreading codes, and address information and timing information necessary for reading-out processing of despreading codes;

 a despreading-code generating unit which continuously generates despreading-codes, based on the control information;

 a code storage unit which stores the despreading codes for each address corresponding to delay time of multi-paths;
a plurality of code reading-out units each of which receives the despreading codes, which have been read out based on the address information, corresponding to eachpath, and outputs the received despreading-codes based on the timing information;
a plurality of demodulating units each of which separately demodulates the received signals, using the despreading codes corresponding to each path; and
a combining unit which combines all the demodulated signals.

2. The receiver according to claim 1, wherein the code storage unit performs, according to a time sharing base, writing-in processing of despreading codes for the like chip interval, and reading-out processing of codes accumulated for the like chip interval.

3. The receiver according to claim 1, wherein the despreading-code generating unit outputs despreading codes for one period based on the control signal, and, thereafter, stops the operation.

4. The receiver according to claim 3, wherein the despreading-code generating unit further outputs new despreading codes for one period based on the control signal in the case of changes in the despreading codes, and, thereafter, stops the operation.

5. The receiver according to claim 1, wherein the code storage unit further has a configuration where conversion from serial data of one bit to parallel data of plural bits is performed at writing-in operation of the despreading codes; the converted parallel data are simultaneously written in; conversion from parallel data of plural bits, which have been simultaneously read out, to serial data of one bit is performed at subsequent reading-out operation; and the converted serial data are output to the code reading-out section one by one.

6. The receiver according to claim 1, further comprising:

    a plurality of combinations of the code storage unit, the code reading-out unit, and the demodulating unit; and
    a selection unit which selects any one of the plurality of code storage units,

    wherein the despreading codes are stored in the code storage unit selected by the selection unit.

7. The receiver according to claim 6, further comprising:

    a plurality of the despreading-code generating units,

    wherein the despreading codes generated in each despreading generating unit are stored in the code storage unit selected by the selection unit.

8. The receiver according to claim 1, wherein the despreading-code generating unit generates Msequence codes by calculating an exclusive-OR of arbitrary bit outputs in a shift register.

9. The receiver according to claim 8, wherein the despreading codes are generated by provision of plurality of the despreading-code generating unit, and by calculating an exclusive-OR of the outputs of each despreading-code generating unit.

10. A method of generating despreading-codes for a receiver which separately demodulates received signals in a multi-path communication environment, using despreading codes corresponding to each path, the method comprising:

    a despreading-code generating step of continuously generating despreading-codes, based on control information necessary for generating processing of despreading codes;
    a code storage step of storing the despreading codes for each address corresponding to the delay time of multi-paths; and
    a plurality of code reading-out steps for receiving the despreading codes, which have been read out based on the address information, corresponding to each path, and for outputting the received despreading codes based on predetermined timing information.

11. The method of generating despreading-codes according to claim 10, wherein the code storage step performs writing-in processing of despreading codes for the like chip interval, and reading-out processing of codes accumulated for the like chip interval according to the time sharing base.

12. The method of generating despreading-codes according to claim 10, wherein the despreading code generating step outputs despreading codes for one period based on the control signal, and, thereafter, stops the operation.

13. The method of generating despreading-codes according to claim 12, wherein the despreading code generating step further outputs new despreading codes for one period based on the control signal in the case of changes in the despreading codes, and, thereafter, stops the operation.

14. The method of generating despreading-codes according to claim 10, wherein the code storage step comprises:

     performing conversion from serial data of one bit to parallel data of plural bits at writing-in operation of the despreading codes; simultaneously writing in the converted parallel data and subsequently; performing conversion from parallel data of plural bits, which have been simultaneously read out, to serial data of one bit at reading-out operation; and outputting the converted serial data one by one.

15. The method of generating despreading-codes according to claim 10, wherein the despreading codes are generated for each process by provision of a plurality sets comprising a series of the code storage step and the code reading-out step, and by further inclusion of a selection step of selecting any one of the plural sets of processes.

# FIG.1

EP 1 283 613 A1

# FIG.2

REFERENCE
TIMING

DELAY: 0
(GENERATION OF
ORIGINAL CODE)

| 0123··· | m | 0123··· | m | 0123··· | ·· |

DELAY: D1
(INPUT TO FIRST
DEMODULATOR 12a)

D1 | 0123··· | m | 0123··· | m | 0123··· |

DELAY: D2
(INPUT TO SECOND
DEMODULATOR 12b)

D2 | 0123··· | m | 0123··· | m | 0123··· |

DELAY: Dn
(INPUT TO Nth
DEMODULATOR 12c)

Dn | 0123··· | m | 0123··· | m |

EP 1 283 613 A1

# FIG.3

# FIG.4

TIMING OF WRITING-IN AND
READING-OUT TO/FROM CODE
ACCUMULATION SECTION 2

W : WRITING-IN
R1,···,Rn : READING-OUT

LATCH TIMING FOR FIRST CODE
READING-OUT SECTION 11a

LATCH TIMING FOR SECOND
CODE READING-OUT SECTION 11b

LATCH TIMING FOR Nth CODE
READING-OUT SECTION 11c

LATCH TIMING FOR AFTER STEP
(COMMON FOR EACH READING-
OUT SECTION)

ONE CHIP INTERVAL

| W | R1 | R2 | R3 | ··· | Rn | W | R1 | R2 | R3 | ··· | Rn | ··· |

EP 1 283 613 A1

# FIG.5

| TIMING FOR GENERATING ORIGINAL CODE | SPREADING CODE ONE PERIOD | |
|---|---|---|
| | GENERATION OF ORIGINAL CODE | |

| WRITING-IN AND READING-OUT TO/FROM CODE ACCUMULATION SECTION | WRITING-IN, AND READING-OUT | ONLY READING-OUT ... |

# FIG.6

TIMING FOR GENERATING ORIGINAL CODE

SPREADING CODE ONE PERIOD

| GENERATION OF ORIGINAL CODE | | GENERATION OF ORIGINAL CODE |

WRITING-IN AND READING-OUT TO/FROM CODE ACCUMULATION SECTION 2

| WRITING-IN, AND READING-OUT | ONLY READING-OUT ... | WRITING-IN, AND READING-OUT | ONLY READING-OUT |

CHANGE IN DESPREADING CODE

EP 1 283 613 A1

# FIG.7

ORIGINAL CODE GENERATING SECTION — 1

FIRST BIT-WIDTH CONVERSION SECTION — 21

CODE ACCUMU-LATION SECTION — 2

SECOND BIT-WIDTH CONVERSION SECTION — 22

CONTROL SECTION — 3

RECEIVED SIGNAL

CODE READING-OUT SECTION — 4

FIRST READING-OUT SECTION — 11a

SECOND READING-OUT SECTION — 11b

Nth READING-OUT SECTION — 11c

DEMODULATING SECTION — 5

FIRST DEMODULATOR — 12a

SECOND DEMODULATOR — 12b

Nth DEMODULATOR — 12c

SYMBOL SYNTHESIZING SECTION — 6

EP 1 283 613 A1

# FIG.8

x CHIP INTERVAL

WRITING-IN AND READING-OUT
TO/FROM CODE ACCUMULATION
SECTION

| W | R1 | R2 | R3 | ⋯ | Rn | W | R1 | R2 | R3 | ⋯ | Rn | ⋯ |

W : WRITING-IN
R1,⋯,Rn : READING-OUT

LATCH TIMING FOR FIRST CODE
READING-OUT SECTION 11a

LATCH TIMING FOR SECOND CODE
READING-OUT SECTION 11b

LATCH TIMING FOR Nth CODE
READING-OUT SECTION 11c

LATCH TIMING FOR AFTER STEP
(COMMON FOR EACH READING-
OUT SECTION)

EP 1 283 613 A1

# FIG.9

ORIGINAL CODE GENERATING SECTION — 1

DIS-TRIBUTION SECTION — 31

FIRST CODE ACCUMU-LATION SECTION — 32

CONTROL SECTION — 3

FIRST CODE READING-OUT SECTION — 34

FIRST READING-OUT SECTION — 11a

SECOND READING-OUT SECTION — 11b

Nth READING-OUT SECTION — 11c

FIRST DEMODULATING SECTION — 36

SECOND CODE ACCUMU-LATION SECTION — 33

SECOND CODE READING-OUT SECTION — 35

FIRST READING-OUT SECTION — 11a

SECOND READING-OUT SECTION — 11b

Nth READING-OUT SECTION — 11c

SECOND DEMODULATING SECTION — 37

FIG.10

FIG.11

ORIGINAL CODE GENERATING SECTION

ARBITRARY PN CODE GENERATING SECTION

GENERATOR-POLYNOMIAL PATTERN (SET AT CONTROL SECTION)

SHIFT REGISTER SECTION

D-FF (n)   D-FF (n-1)   ...   D-FF (1)   D-FF (0)

MASKING SECTION

#(n)   #(n-1)   ...   #(1)   #(0)

ADDER

mod2

SELECTION SECTION

PN CODE

# FIG.12

ORIGINAL CODE
GENERATING SECTION

FIRST ARBITRARY PN CODE
GENERATING SECTION — 61a

SECOND ARBITRARY PN CODE
GENERATING SECTION — 61b

Nth ARBITRARY PN CODE
GENERATING SECTION — 61N

ADDER — 71

DESPREADING
CODE

# FIG.13

# FIG.14

PN CODE GENERATOR  112

PN_ROM ADDRESS

PN CHECK SIGNAL

RELATIVE PN ADDRESS

123
D Q
CK

124
PN CODE
ROM

PN CODE

ROM ADDRESS

122
Σ

121
COUNTER

CHIP CLOCK

## INTERNATIONAL SEARCH REPORT

| | |
|---|---|
| | International application No. |
| | PCT/JP01/03950 |

**A. CLASSIFICATION OF SUBJECT MATTER**
Int.Cl⁷ H04J13/04

According to International Patent Classification (IPC) or to both national classification and IPC

**B. FIELDS SEARCHED**

Minimum documentation searched (classification system followed by classification symbols)
Int.Cl⁷ H04J13/00-13/06, H04B1/707-1/713

Documentation searched other than minimum documentation to the extent that such documents are included in the fields searched
Jitsuyo Shinan Koho          1926-1996    Toroku Jitsuyo Shinan Koho  1994-2001
Kokai Jitsuyo Shinan Koho    1971-2001    Jitsuyo Shinan Toroku Koho  1996-2001

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
|---|---|---|
| P,X<br>P,A | JP 2000-349681 A (NEC Corporation),<br>15 December, 2000 (15.12.00),<br>column 3, line 24 to column 6, line 46; Figs. 2 to 4<br>(Family: none) | 1-2,10-11<br>3-9,12-15 |
| A | JP 9-55715 A (Toshiba Corporation),<br>25 February, 1997 (25.02.97),<br>column 9, line 5 to column 10, line 22; Figs. 7 to 8<br>& US 5940432 A | 1-15 |
| A | JP 9-511893 A (Nokia Telecommunications OY),<br>25 November, 1997 (25.11.97),<br>page 11, line 23 to page 12, line 6; page 14, lines 9<br>to 24; Fig. 6<br>& WO 96/24998 A     & EP 808536 A1<br>& US 5963348 A | 1-15 |
| A | JP 9-36778 A (Oki Electric Industry Co., Ltd.),<br>07 February, 1997 (07.02.97),<br>Full text; all drawings<br>(Family: none) | 1-15 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>07 August, 2001 (07.08.01) | Date of mailing of the international search report<br>21 August, 2001 (21.08.01) |
| Name and mailing address of the ISA/<br>Japanese Patent Office | Authorized officer |
| Facsimile No. | Telephone No. |

Form PCT/ISA/210 (second sheet) (July 1992)

# EP 1 283 613 A1

| INTERNATIONAL SEARCH REPORT | International application No. |
| --- | --- |
| | PCT/JP01/03950 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| A | JP 10-107594 A (Oki Electric Industry Co., Ltd.), 24 April, 1998 (24.04.98), Full text; all drawings (Family: none) | 1-15 |

Form PCT/ISA/210 (continuation of second sheet) (July 1992)

26